# EUROPEAN PATENT APPLICATION

(11) **EP 3 339 099 A1**
(43) Date of publication of application: **27.06.2018**
(21) Application number: 16382640.7
(22) Date of filing: 22.12.2016
(51) Int. Cl.: B60R 1/08

(54) **REAR VIEW MIRROR FOR MOTOR VEHICLES**

(71) Applicant: Fico Mirrors S.A., 08028 Barcelona (ES)
(72) Inventor: GÓMEZ TIMONEDA, David, 08232 Viladecavalls (ES); LORIVAL, Frédéric, 08232 Viladecavalls (ES); LOPEZ GALERA, Robert, 08232 Viladecavalls (ES); BIOSCA YUSTE, Oriol, 08232 Viladecavalls (ES)
(74) Representative: ZBM Patents - Zea, Barlocci & Markvardsen

(57) **Abstract**

The rear view mirror (100) comprises a rear view mirror housing (110) to be movably mounted to a portion of a motor vehicle, a reflective element (120) received in the housing (110), and actuating means (130) for moving the rear view mirror housing (110) in at least two different positions. The actuating means (130) include at least one operator interface element (200) for operating and/or controlling and/or selecting and/or indicating different parameters and functions in the motor vehicle by the user.

## Description

The present disclosure relates to rear view mirrors for motor vehicles and specifically to rear view mirrors of the type having operator interface elements for controlling and/or selecting a number of functions and/or options in a motor vehicle.

### BACKGROUND

Rear view mirrors for motor vehicles are increasingly incorporating functionalities and/or options operable and/or selectable through operator interface elements. Operator interface elements may be in the form of control buttons, switches, touch screens, etc. Such operator interface elements are usually provided in a housing or case where a mirror pane and/or display is received, or in an outer bezel or mounting element that surrounds the mirror pane.

Examples of functionalities in current rear view mirrors for motor vehicles may be LCD display screens for displaying diverse information such as for example indoor and outdoor temperature, compass and GPS data, camera systems, parking sensor systems, data storage media such as memory card drives, etc. Graphics, icons, text, a combination thereof, or the like may be used together with said functionalities according to the function to be performed so as to inform the user accordingly.

Rear view mirrors for motor vehicles are also increasingly incorporating connecting elements that may be, for example, in the form of power jacks, audio and video input/output, USB interfaces, etc.

One example of a rear view mirror including operator interface elements is disclosed in US7683768. Such interface elements are in the form of input buttons integrally formed at a portion of a bezel or mirror housing during the moulding operation that forms the bezel or housing. The rear view mirror further includes display devices that are visible to the driver for displaying information.

A further example of rear view mirrors of the above type is described in US7527403. The rear view mirror includes operator interface elements comprising buttons movably mounted to a rear view mirror bezel. The buttons are movable by a user to engage and actuate an electronic switch within the mirror assembly.

While known prior art rear view mirror devices with operator interface elements have been shown to provide enhanced functionalities to the user, they however are not ergonomic and hinder usability. A further disadvantage with such mirror devices is that operator interface elements involve an increased effective area of the bezel or housing resulting in an increased overall size of the rear view mirror device.

In addition, the mirror pane or the display in prior art rear view mirror devices may become dirty under normal usage when the user touches the buttons with her/his fingers. Still a disadvantage in prior art rear view mirror devices is that the mirror devices are usually positioned at a height that is usually higher that that of the driver's eyes resulting in that the visibility of the buttons is undesirably reduced.

Rear view mirrors including display screens are also known. Whether they have a mirror reflective element or not, operator interface elements are required for controlling parameters related to the display such as brightness, contrast, colour, field of vision, etc. In this type of rear view mirrors, the interface elements are usually in the form of buttons. The buttons are located on modules external to the rear view mirror or in the mirror housing or case itself. This involves risks due to difficult access to the operator interface elements. In many cases they are not visible or they are hardly accessible to the user or driver resulting in that drivers can take both their mind and their eyes off the road and even their hands off critical controls of the motor vehicle. When the driver wishes to operate the buttons in the mirror housing, the mirror housing may become moved from the proper position and in some cases the display screen of the mirror reflective element may even become scratched.

A need therefore still exists for rear view mirror devices including at least one of the above mentioned operating functionalities that can be operated easily by the user through at least one operator interface element while the overall size of the rear view mirror device is not increased and without compromising safety when operating and/or controlling and/or selecting said functionalities.

### SUMMARY

A rear view mirror for motor vehicles is herein disclosed with which the above disadvantages are overcome. The present rear view mirror has been found to further provide a number of additional advantages, as it will be described further below.

The present rear view mirror comprises a rear view mirror housing or case. A reflective element is received inside the housing or case, and fixed thereto. The housing of the rear view mirror is adapted to be movably mounted to a portion of a motor vehicle such as windscreen, headliners, a suitable surface of the vehicle interior, etc. As an example, the rear view mirror housing may be movably mounted to an inside surface of a motor vehicle front windshield. Other locations in the vehicle are of course possible.

As used herein, a reflective element may be a variable-reflectance or variable transmittance mirror reflective element, or it may be formed of a half mirror, a mirror with fixed reflectance and transmittance characteristics, etc.

Actuating means are also provided. The actuating means are intended for moving either the whole rear view mirror housing or the reflective element or a display by the user in at least two different positions. Such actuating means for moving the mirror housing may be for example in the form of a tab or toggle member that is pivotally mounted in the mirror housing, projecting outwards. The tab or toggle member is designed to be operated by the user's hand to move the mirror housing into said at least two different positions. Said different positions of the mirror housing may be preset positions. Movement of the rear view mirror housing may be performed for the purpose of changing the angle of the surface of the reflective element and therefore the direction of the light being reflected resulting in an advantageous attenuated reflection. The at least two different positions of the mirror housing may for example correspond to higher and lower reflectivity mirror housing positions, that is, day and night positions. Thus, when the rear view mirror is, for example, in the night position, the mirror housing is positioned such that the glare from headlights behind the vehicle is reduced for the driver when driving.

In the present rear view mirror, the actuating means for moving the rear view mirror housing in different positions include at least one operator interface element. An interface element as used herein is defined as any element or elements suitable for controlling and/operating and/or sensing and/or selecting a number of functions and/or options in a motor vehicle and/or for the communication of information between the motor vehicle and at least one user such as one or more selected from at least one switch button, and/or at least one switch lever, and/or at least one touch screen, and/or at least one proximity switch, and/or at least one rotary or joystick type interface element, one or more electrical and/or electronic devices such as one or more microphones, displays, thermometers, etc.

The provision of one or a multiplicity of operator interface elements in the mirror housing actuating means renders said interface elements to be advantageously more accessible and visible to the user or driver. The operator interface element or elements is (are) positioned substantially closer to the user's eye level resulting in a safe and very comfortable and practical assembly. In addition, the rear view mirror with the above described configuration has been shown to be very ergonomic since the user or driver can advantageously operate any interface elements with the help of her/his fingers supported on a back or rear portion of the mirror housing actuating means.

Still a further significant advantage of the above rear view mirror configuration is that the operator interface element or elements may be provided even if the rear view mirror is of the frameless type. In such rear view mirrors, the reflective element is attached to the bezel or mirror housing with no portions of the bezel or mirror housing encompassing the perimeter edge region of the mirror reflective element front surface. Operator interface element or elements, such as buttons, can be advantageously integrated in this type of rear view mirror as the operator interface element or elements are mounted in the mirror housing actuating means. In general, the operator interface element or elements may be provided in any type of rear view mirrors for motor vehicles, regardless their configuration, shape, size or type, even in those of the above mentioned frameless type. In all cases, the operator interface element or elements can be positioned such that they can be viewed and operated by the user or driver very easily.

In the examples of the present disclosure, the actuating means may further include means for indicating the user the function(s) and/or option(s) that have been activated and/or selected and/or controlled by the operator interface element or elements in the mirror housing actuating means. Such indicating means may for example comprise at least one LED that may be switched on, switched off, and/or blink in accordance with the information to be provided to the user or driver about the function(s) and/or option(s) that is (are) being controlled and/or activated and/or selected by the operator interface element or elements.

Said means for indicating the user options that have been activated and/or selected and/or controlled by the operator interface elements may be also included in the toggle member. Such indicating means may comprise, for example, LEDs that can be switched on and off and/or blink in accordance with the information to be provided to the user or driver relating to one or more functions controlled and/or operated and/or selected by the operator interface elements. The indicating means may be arranged at any suitable position in the toggle member. In some embodiments, the indicating means may be displayed on a display screen. The indicating means may be arranged such that function(s) and/or option(s) that have been activated and/or selected and/or controlled by the at least one interface element are displayed to the user through a display screen that may be associated with the rear view mirror. Said display screen may be installed, for example, inside the rear view mirror, outside the rear view mirror, in the bezel, or behind a half mirror. Usability for typing on the actuating means or toggle member is thus advantageously facilitated. This allows the user or operator to check the commands or operations performed by simply looking at the display.

The operator interface element or elements may be located at any given area or areas of the mirror housing actuating means. For example, the operator interface element or elements may be located at a front surface and/or at a side surface of the mirror housing actuating means. Other areas or combinations thereof in the mirror housing actuating means are not ruled out. For example, the operator interface element may be located at a rear or back surface and/or at a bottom surface of the mirror housing actuating means, as required or desired.

The operator interface element or elements in the mirror housing actuating means is (are) configured for controlling and/or selecting and/or operating different aspects, functions, options, etc. of the motor vehicle. Such different aspects, functions, options, etc. of the motor vehicle that can be selected and/or operated by the operator interface element may be provided in the mirror housing itself. Other locations are however not ruled out. For example, said aspects, functions, options, may be one or more devices connected via LINK or CAN technology. On the other hand, the actuating means may have a controller fitted inside and/or outside the mirror housing and it may be used for other functionalities such as for controlling and/or actuating a display.

For example, the operator interface element or elements in the mirror housing actuating means is (are) configured for controlling one or more operations or functions of a display in the rear view mirror such as brightness, contrast, colour, field of vision, etc. Said display may be for example a rear camera liquid crystal display (LCD) screen integrated into the mirror housing. In this case, the LCD screen is input with video signals from at least one video camera that is mounted at the rear of the motor vehicle to provide a view directly behind the vehicle while backing up or driving forwardly. The video signals may be displayed automatically to the user or driver when the motor vehicle is shifted into reverse and they are no longer displayed when the motor vehicle is shifted into any other gear. In other cases, said display may be for example a display screen for showing information to the user or driver.

In any case, the operator interface element is configured to perform and/or control and/or select at least one function selected from: turning on/off a mirror display, controlling a compass device, parking camera, interior cameras, exterior cameras, light sensors, rain sensors, display brightness set up, display colour set up, display contrast set up, display field of view set up, menu select, audio set up, time set up, wireless communication set up, control of lights, etc. Other functions are also possible. Irrespective of the kind of interface element as described above, it may be configured so it is capable of operating elements arranged both inside and outside the rear view mirror housing.

The present rear view mirror may further comprise at least one electronic circuit, for example in the form of a printed circuit board for managing digital inputs from the at least one operator interface element. The printed circuit board may be arranged in the actuating means and/or in the rear view mirror housing as required.

Although the present rear view mirror has been described with at least one operator interface element arranged in the mirror housing actuating means, the present rear view mirror may further include one or more operator interface elements in the housing of the rear view mirror as well. For example, the present rear view mirror could include buttons provided in the rear view mirror housing and buttons provided in the mirror housing actuating means. However, the provision of the at least one operator interface element in the mirror housing actuating means is preferred for the above mentioned advantages. Particular modifications in standard mirror housing actuating means may not be necessary to include operator interface elements depending on their type. Standard actuating means offer enough space for receiving operator interface elements therein.

Additional objects, advantages and features of examples of the present rear view mirror for motor vehicles will become apparent to those skilled in the art upon examination of the description, or may be learned by practice thereof.

### BRIEF DESCRIPTION OF THE DRAWINGS

One particular embodiment of the present rear view mirror for motor vehicles will be described in the following by way of a non-limiting example. The following description is made with reference to the appended drawings in which:
Figure 1 is a front view of a first example of the present rear view mirror for motor vehicles;
Figure 2 is a side view of the example of the rear view mirror in figure 1;
Figure 3 is a front view of a second example of the present rear view mirror for motor vehicles; and
Figure 4 is a perspective sectional view of the example of the rear view mirror in figure 1.

### DETAILED DESCRIPTION OF EXAMPLES

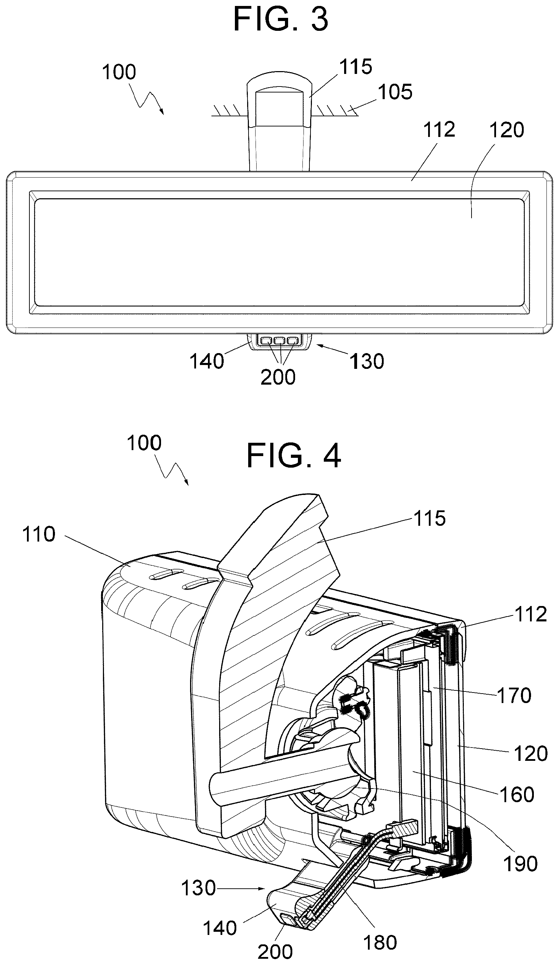

Referring to the examples of the rear view mirror 100 for motor vehicles shown in the figures, it comprises a rear view mirror housing 110 and a bezel 112 as shown in figure 4 in detail. The mirror housing 110 is configured such that a reflective element 120 is fixed thereto. The mirror housing 110 is also configured such that it can be movably mounted to a surface of the vehicle interior such as an inside surface 105 of a motor vehicle front windshield through a support member 115 in combination with a ball and socket joint 190 as shown in figure 4.

The rear view mirror 100 further comprises actuating means 130. The actuating means 130 are configured for manually moving the mirror housing 110 in at least two different positions relative to the inside surface 105 of the motor vehicle front windshield. In the specific examples shown, the mirror housing actuating means 130 comprise a toggle member 140. The toggle member 140 is in the form of a tab pivotally mounted in the rearview mirror housing 110 projecting outwards therefrom. The toggle member 140 is adapted to be manually operated by the user to move the mirror housing 110 to at least two different preset positions for the purpose of changing the angle of the surface of the reflective element 120 in order to provide higher and lower reflectivity positions to the driver according to day and night positions.

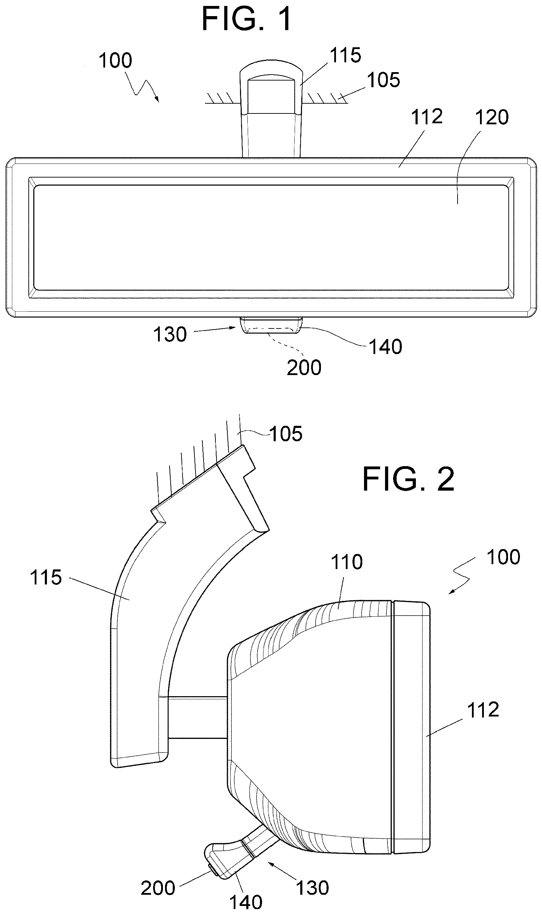

The toggle member 140 in the examples shown in figures 1-4 includes operator interface elements 200 allowing different parameters and functions in the motor vehicle to be controlled and selected by the user. Thus, the operator interface elements 200 allow the user to operate elements arranged inside and/or outside the toggle member 140, inside the rear view mirror housing 110 or in other places of the vehicle. The toggle member 140 allows information to be interchanged between the motor vehicle and the user or driver.

Specifically, in the first example shown in figures 1, 2 and 4 of the drawings, the operator interface element 200 is at a bottom portion of the toggle member 140, while in the second example shown in figure 3 of the drawings, the operator interface element 200 is at a front portion of the toggle member 140. Other arrangements are possible such as at a rear or back surface of the toggle member 140.

As a result of the configuration shown in the drawings, the operator interface element 200 is more accessible to the user or driver and is positioned in a more visible location to the user or driver as it is closer to eye level. The user or driver can operate the operator interface element 200 in a very easy way with the help of her/his fingers supported on a back portion of the toggle member 140.

Although in the examples shown in the figures herein described an operator interface element 200 is provided comprising a switch button, in other examples it may comprise additionally or alternatively one or more ON/OFF buttons, and/or at least one key and/or at least one knob, one or more switch levers, one or more touch screens, one or more proximity switches, one or more joystick type interface elements, and/or combinations thereof, etc. In general, the operator interface element 200 is configured for controlling different aspects or functions in the motor vehicle such as, for example:
- turning on/off a display, e.g. display 170 as illustrated in figure 4,
- controlling compass devices,
- controlling parking camera devices,
- controlling interior camera devices,
- controlling light and/or rain sensors,
- setting up display brightness,
- setting up display colour,
- setting up display contrast,
- setting up display field of view,
- setting up audio,
- setting up time,
- menu select,
- setting up and controlling wireless communications,
- controlling vehicle lights, etc;
and even one or a number of electrical and/or electronic devices such as one or more microphones, displays, thermometers, etc. and in some cases also one or more controllers such as for example for controlling said electrical and/or electronic devices.

In one specific example, not shown, the toggle member 140 may include a central ON/OFF power button positioned between an array of buttons for actuating and controlling devices in a motor vehicle. In a further example, the operator interface element 200 may comprise at least one rotating element. Yet in a further example, the rotating element may be arranged such that it can be rotated by the user around an axis that is substantially aligned with the length of the actuating means 130. In another example, the rotating element may be arranged such that it can be rotated by the user around an axis arranged at an angle to the length of the actuating means 130, such as a 90° angle. In this case, for example, the operator interface element 200 may comprise a body with a rotating element arranged at the respective opposite ends thereof. The rotating element may be associated, for example, with a potentiometer for adjusting a parameter associated with mechanical or electrical devices in a motor vehicle.

As shown in the example of figure 4, the rear view mirror 100 further includes a printed circuit board (PCB) 160. The PCB 160 is shown in figure 4 arranged inside the housing 110 for managing digital inputs from the operator interface element 200. Other locations for the PCB are also possible, for example in the toggle member 140 itself. The PCB 160 is connected with the operator interface element 200 via a connector 180 as shown in figure 4.

Although a particular example of the present rear view mirror for motor vehicles has been disclosed herein, it will be understood by those skilled in the art that other alternative examples and/or uses and obvious modifications and equivalents thereof are possible. For example, although the toggle member 140 has been shown including one operator interface element 200, operator interface elements 200 may be also provided in the housing 110 of the rear view mirror 100. In addition, the rearview mirror 100 may be in communication with at least one external element either by means of a point to point LINK or by means of a CAN bus. Such external element may be directly an element to be controlled either by the operator interface element or elements or through a controller external to the rear view mirror. The present disclosure thus covers all possible combinations of the particular examples described herein. Also, for example, the mirror housing actuating means 130, that is, the toggle member 140, may be sized and shaped in more different ways other than that depicted in the figures. The toggle member 140 may be for example rectangular, triangular, inverted T-shaped, H-shaped, etc.

Reference signs related to drawings and placed in parentheses in a claim, are solely for attempting to increase the intelligibility of the claim, and shall not be construed as limiting the scope of the claim.

Thus, the scope of the present disclosure should not be limited by particular examples, but should be determined only by a fair reading of the claims that follow.

## Claims

1. A rear view mirror (100) for motor vehicles comprising a rear view mirror housing (110) adapted to be movably mounted to a portion of a motor vehicle, a reflective element (120) received in the housing (110), and actuating means (130) for moving the rear view mirror housing (110) in at least two different positions, wherein the actuating means (130) include at least one operator interface element (200).

2. The rear view mirror (100) of claim 1, wherein said at least one operator interface element (200) is suitable for communicating information between the motor vehicle and at least one user.

3. The rear view mirror (100) of claim 1 or 2, wherein, the operator interface element (200) comprises at least one or more of:
- switch buttons, or
- switch levers, or
- touch screens, or
- proximity switches, or
- rotatings elements, or
- joystick type interface elements, or
- electric and/or electronic devices and/or controllers.

4. The rear view mirror (100) of any of the preceding claims, wherein, the actuating means (130) further include indicating means for indicating the user function(s) and/or option(s) that have been activated and/or selected and/or controlled by the at least one operator interface element (200).

5. The rear view mirror (100) of claim 4, wherein the indicating means are arranged such that function(s) and/or option(s) that have been activated and/or selected and/or controlled by the at least one operator interface element (200) are displayed to the user through a display screen.

6. The rear view mirror (100) of claim 5, wherein the display screen is associated with the rear view mirror (100).

7. The rear view mirror (100) of any of the preceding claims, wherein the operator interface element (200) is located in at least one portion selected from a front surface, a side surface, a back surface and a bottom surface of the mirror housing actuating means (130).

8. The rear view mirror (100) of any of the preceding claims, wherein the operator interface element (200) is configured to perform at least one function selected from turning on/off mirror display, compass, parking camera, interior camera, light sensors, rain sensors, display brightness set up, display colour set up, display contrast set up, display field of view set up, menu select, audio set up, time set up, wireless communication set up, control of lights.

9. The rear view mirror (100) of any of the preceding claims, wherein the operator interface element (200) is configured to operate elements arranged inside the rear view mirror housing (110).

10. The rear view mirror (100) of any of the preceding claims, wherein the rear view mirror (100) further comprises at least one printed circuit board (160) for managing digital inputs from the at least one operator interface element (200).

11. The rear view mirror (100) of claim 10, wherein, the printed circuit board (160) is arranged in the actuating means (130).

12. The rear view mirror (100) of claim 10 or claim 11, wherein the printed circuit board (160) is arranged in the rear view mirror housing (110).
